# EUROPÄISCHE PATENTSCHRIFT

(11) **EP 2 120 022 B1**
(45) Veröffentlichungstag und Bekanntmachung des Hinweises auf die Patenterteilung: **06.08.2014**
(21) Anmeldenummer: 09006074.0
(22) Anmeldetag: 04.05.2009
(51) Int. Cl.: G01G 19/44, G01G 21/22

(54) **Wägetisch zur kontinuierlichen Verwiegung von Schmelztiegeln**
Weighing table for continuous weighing of melting pots
Table de pesage destinée au pesage continu de creusets

(30) Priorität: 15.05.2008 DE 102008023682
(43) Veröffentlichungstag der Anmeldung: 18.11.2009
(73) Patentinhaber: Finze & Wagner Ingenieurgesellschaft UDI mbH, 84489 Burghausen (DE)
(72) Erfinder: Wagner, Hans-Peter, Dr., 84489 Burghausen (DE); Geiwagner, Peter, 84375 Kirchdorf/Inn (DE)
(74) Vertreter: Keilitz, Wolfgang

(56) Entgegenhaltungen:
- EP-A- 1 380 818
- US-A- 3 935 914
- US-A- 5 064 009
- US-A- 5 773 768

## Beschreibung

Die Erfindung betrifft einen Wägetisch zum Wiegen von Gegenständen, insbesondere zum Verwiegen von Tiegeln für Metallschmelzen und im weiteren Sinne für Behälter oder Stückgüter mit unkoordinierter bzw. unkontrollierter Aufbringung, gemäß dem Oberbegriff des Patentanspruchs 1.

Metallschmelzen werden üblicherweise in Tiegel abgefüllt, die als Transportbehälter dienen. Die befüllten Tiegel werden meist per LKW zu einer Gießerei transportiert. Dort wird die Schmelze zwischengelagert oder unmittelbar in entsprechende Formen gegossen, um Metallteile herzustellen. Die leeren Tiegel werden dann wieder zur Metallhütte zurück transportiert.

Aus der EP 1 380 818 A1 ist beispielsweise eine Plattformwaage mit höhenverstellbaren Fahrrollen bekannt. Durch das Anheben der Wiegeplattform werden die Wägezellen entlastet und durch ein Absenken der Plattform belastet, so dass sie die auf die Plattform wirkenden Kräfte aufnehmen können. Diese Plattformwaage ist jedoch zum Verwiegen von Schmelztiegeln nicht geeignet.

Das Befüllen und Entleeren der Tiegel erfolgt ausschließlich von Hand unter Aufsicht des Betriebspersonals. Die Befüllung der Tiegel und Qualität des Produktes obliegt dabei einzig der professionellen, Arbeit des Betriebspersonals. Eine Automatisierung des Befüllens und Entleerens ist bislang nicht möglich, da die Prozessbedingungen wegen der hohen Temperaturen und der starken mechanischen Belastungen für die meisten Sensoren und Steuerungen zu rau sind. Daher war es bislang auch nicht möglich, die Befüll- oder Entnahmemenge oder den Restinhalt der Tiegel genau zu bestimmen.

Es ist somit eine Aufgabe der vorliegenden Erfindung, eine Vorrichtung zur automatischen Befüllung oder Entleerung von Schmelztiegeln zu schaffen, die den rauen Umgebungsbedingungen gewachsen ist und eine kontinuierliche Gewichtsmessung beim Befüllen bzw. Entleeren der Tiegel ermöglicht.

Gelöst wird diese Aufgabe gemäß der Erfindung durch die im Patentanspruch 1 angegebenen Merkmale Weitere Ausführungsformen der Erfindung sind Gegenstand von Unteransprüchen.

Ein wesentlicher Aspekt der Erfindung besteht darin, einen Wägetisch zu konstruieren, der ein Bodenteil, mehrere Wägezellen und ein Deckenteil umfasst, das im Messbetrieb auf den Wägezellen gelagert ist. Um die Wägezellen vor Stößen zu schützen, die beim Be- oder Entladen des Tisches auftreten, ist ferner eine Hubvorrichtung vorgesehen, mit der das Deckenteil angehoben werden kann. Die Hubvorrichtung ist dabei so konstruiert, dass das Deckenteil in eine erste Position, in der die Wägezellen entlastet sind, oder in eine zweite Position, in der die Wägezellen die auf das Deckenteil wirkenden Gewichtskräfte aufnehmen, gebracht werden kann, Zudem sind ein oder mehrere Dämpfungselemente zur Aufnahme von horizontal wirkenden Querkräften vorgesehen.

Der Wägetisch wird vorzugsweise automatisch vor dem Be- oder Entladen in die erste Position gefahren. Die Wägezellen sind somit vor Stößen und Schlägen geschützt. Zum Messen wird der Wägetisch dann in die zweite (Wäge-)Position gefahren. In der ersten Position ist das Deckenteil vorzugsweise im Abstand von zumindest einigen Millimetern zu den Wägezelien angeordnet. Der Abstand beträgt beispielsweise zwischen 3 mm und 5 mm.

Die erfindungsgemäße Hubvorrichtung umfasst vorzugsweise mehrere Hubzylinder und arbeitet vorzugsweise hydraulisch.

Die Wägezellen sind vorzugsweise zwischen Boden- und Deckenteil angeordnet, so dass sie (in der Wägeposition) die auf das Deckenteil wirkenden Gewichtskräfte aufnehmen. Als Wägezellen können z. B. herkömmliche Kraftmessdosen mit Einbausatz (sog. Lastaufnehmer) verwendet werden.

Die Dämpfungselemente sind vorzugsweise zwischen einem Abschnitt des Bodenteils und einem Abschnitt des Deckenteils angeordnet. Somit ist von allen Seiten ein Schutz gegen fremde Krafteinflüsse geboten. Die Dämpfungselemente sind vorzugsweise als Dämpfungsmatten oder in Form anderer Dämpfer realisiert.

Die Dämpfungselemente können beispielsweise ein oder mehrere am Boden- oder Deckenteil montierte Profile aufweisen, die das andere Teil, an dem sie nicht montiert sind, in vertikaler Richtung überlappen. Zwischen dem überlappenden Teil der Profile und dem Boden- oder Deckenteil sind vorzugsweise die eigentlichen Dämpfer vorgesehen. Letztere können beispielsweise elastische Gummi- oder Kunststoffelemente sein.

Gemäß einer speziellen Ausführungsform der Erfindung haben die vorstehend genannten Profile ein U- oder Rechteck-Profil.

Die Funktion der Hubvorrichtung wird vorzugsweise mittels eines Kontrollsensors überwacht. Dadurch wird sichergestellt, dass sich die Hubvorrichtung beim Be- oder Entladen des Wägetisches in der ausgefahrenen Stellung befindet. Als Kontrollsensor können beispielsweise bekannte kapazitive oder optische Sensoren verwendet werden.

Bei einer Messung wird die Gewichtskraft der Last vorzugsweise vom Deckenteil über Druckplatten auf die Wägezellen übertragen. Unsymmetrische Krafteinwirkungen werden an Wägeindikatoren kompensiert. Diese Druckplatten sind vorzugsweise separate Bauteile, die an der Unterseite des Deckenteils montierbar sind.

Die Druckplatten sind vorzugsweise über einen Querlenker, wie vorstehend beschrieben, mit dem Bodenteil verbunden und haben einen entsprechenden Montageabschnitt.

Zusätzliche Sicherheit vor mech. Zerstörung bieten externe Abhebsicherungen (z. B. Gewindebolzen). Diese sind im Hallenboden verankert und an der Deckenplatte mit einem Endanschlag versehen

Das Bodenteil umfasst für jede Anordnung aus Wägezelle, Hydraulikstempel und Sensor vorzugsweise ein Gehäuse. Die Gehäuse sind vorzugsweise seitlich für Einstellungen und Revisionen zu öffnen. Im normalen Betriebszustand sind diese hermetisch geschlossen.

In der Bodenplatte der Gehäuse ist vorzugsweise je eine Justierschraube vorgesehen, mittels derer das Niveau des Hallenbodens ausgeglichen werden kann.

Das Boden- und/oder Deckenteil ist vorzugsweise aus einer Rahmenkonstruktion, vorzugsweise aus Metallprofilen, hergestellt.

Gemäß einer speziellen Ausführungsform der Erfindung umfasst das Bodenteil eine Plattform für hydraulische und/oder elektrische Bauelemente. Die Plattform hat vorzugsweise die Form einer Auffangwanne, die im Falle einer Leckage der hydraulischen Hubvorrichtung das austretende Hydraulikfluid auffängt.

Auf dem Wiegtisch kann ein Tiegelstuhl, d.h. ein Tragegerüst für Tiegel befestigt sein, der vorzugsweise einen Kippmechanismus aufweist. Der Tiegelstuhl ist vorzugsweise auf dem Deckenteil des Wägetisches montiert.

Gemäß einer Ausführungsform der Erfindung kann auch eine manuelle Steuerung vorgesehen sein, mittels derer der Wägetisch vom Bedienpersonal in eine gewünschte Position verstellt werden kann.

Eine Gewichtsmessung wird vorzugsweise wie folgt durchgeführt. Der Wägetisch befindet sich im unbeladenen Zustand vorzugsweise in der ersten, ausgefahrenen Position. Das Heranführen eines Tiegels bzw. eines anderen Gegenstandes wird mittels einer Sensorik, z. B. eines optischen oder induktiven Sensors erkannt. Nach dem Aufsetzen der Last fährt ein zugehöriges Steuergerät den Tisch automatisch in die Messposition und führt eine Gewichtsmessung durch. Nach Erreichen eines vorgegebenen Endzustands, wie z. B. eines vorgegebenen Soll-Gewichts, wird der Vorgang automatisch beendet. Die Steuerung des Wägetisches steuert hierzu die Befüllanlage oder den Kippmechanismus eines Tiegelstuhls entsprechend an, sobald das gewünschte Endgewicht erreicht ist. Vor dem Abheben des Tiegels wird der Wägetisch vorzugsweise wieder automatisch in die erste Position gefahren. Der Tiegel bzw. ein andere Last kann danach ohne Gefahr einer Beschädigung des Wägetisches abgehoben werden. Die Steuerung der einzelnen Prozessschritte erfolgt vorzugsweise mittels einer zugehörigen Steuerung.

Der erfindungsgemäße Wägetisch umfasst vorzugsweise auch eine Einrichtung, mit der bestimmte Daten, insbesondere solche über den Inhalt, die Menge, Qualität, etc., auf einen am Tiegel befindlichen Transponderchip (z. B. RFID) geschrieben bzw. davon gelesen werden können.

Die Erfindung wird nachstehend anhand der beigefügten Zeichnungen beispielhaft näher erläutert. Es zeigen:
Fig. 1 einen Wägetisch zum kontinuierlichen Wiegen von Schmelztiegeln in einem Beladezustand;
Fig. 2 den Wägetisch von Fig. 1 im Messzustand;
Fig. 3 das Bodenteil des Wägetisches mit mehreren Wägezellen;
Fig. 4a und 4b eine Darstellung der Anordnung der Wägezellen von der Seite und von oben;
Fig. 5 das Bodenteil eines Wägetisches mit zentraler Montage,- bzw. Wartungsplattform;
Fig. 6 das Deckenteil des Wägetisches mit Dämpfungsprofilen;
Fig. 7 eine Ausführungsform eines Dämpfungsprofils;
Fig. 8 eine Vorrichtung zum automatischen Entleeren von Schmelztiegeln; und
Fig. 9 den Wägetisch ohne Tiegelstuhl.

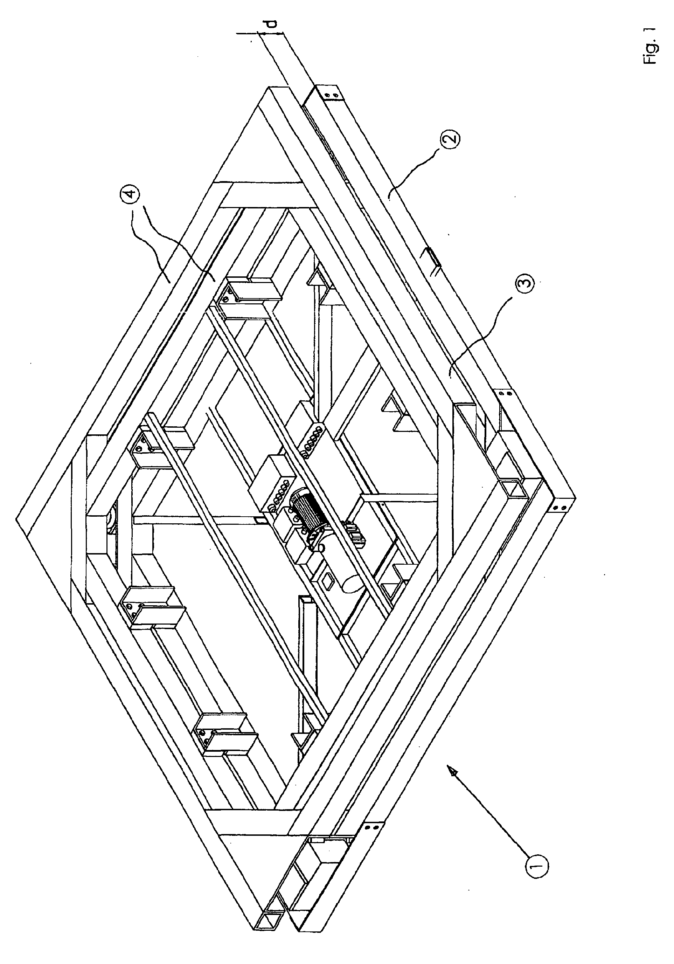

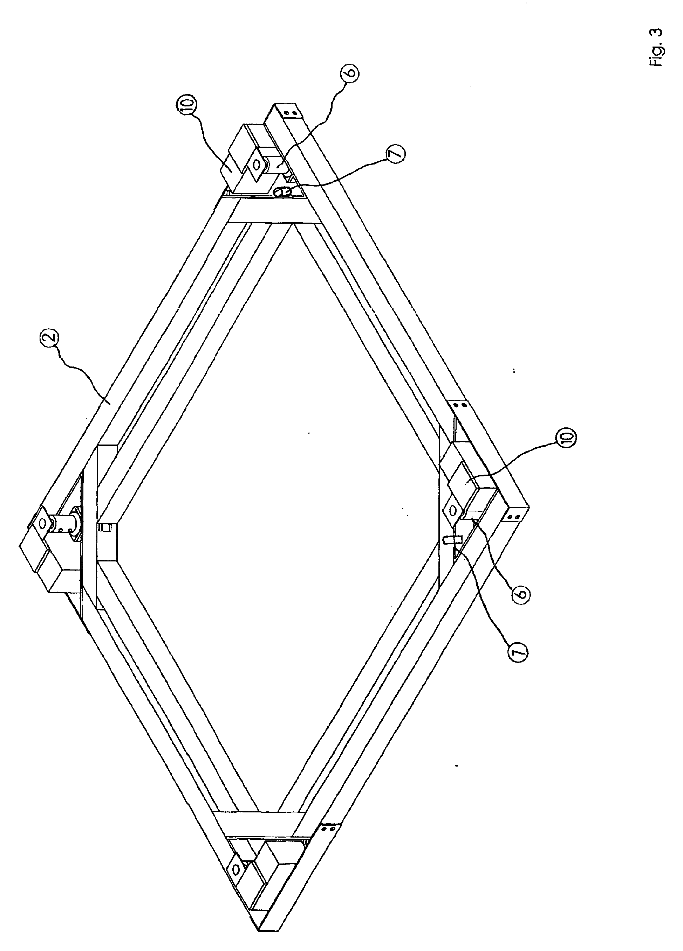

Fig. 1 zeigt das Grundgerüst eines Wägetisches 1 zum Wiegen schwerer Lasten insbesondere Schmelztiegeln in der Metallverarbeitung. Der Wägetisch 1 umfasst ein Bodenteil 2 und ein Deckenteil 3, das schwimmend auf mehreren Lastaufnehmern 10 (siehe Figur 3) angeordnet ist. Boden- und Deckenteil 2, 3 sind hier als eine Rahmenkonstruktion aus mehreren miteinander verschweißten Metallprofilen 4 hergestellt.

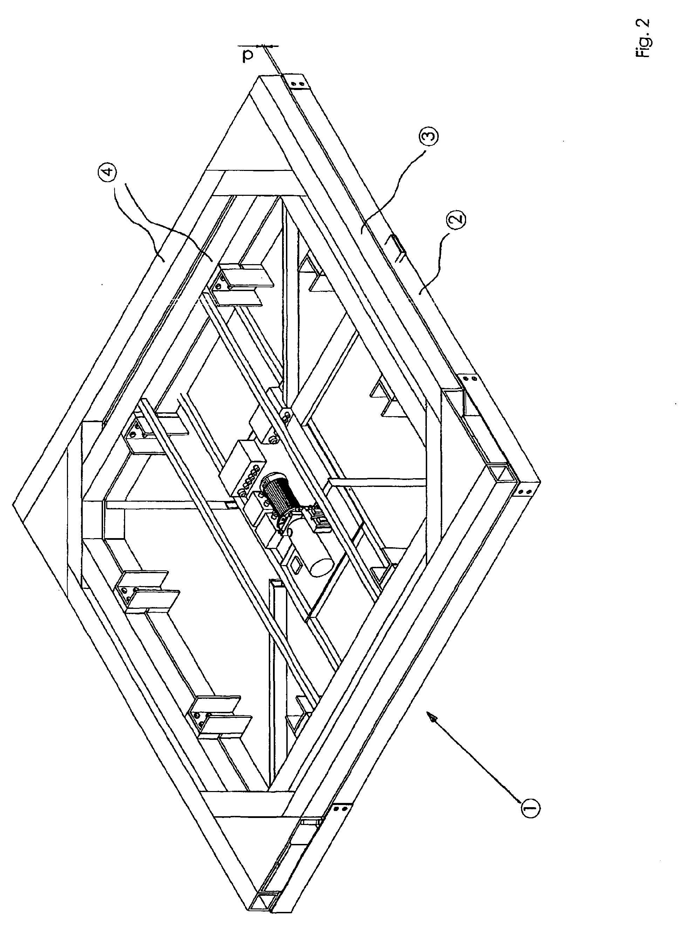

In Fig. 1 befindet sich der Wägetisch 1 in einer Belade-/Entlade-Position mit angehobenem Deckenteil 3. Zwischen dem Boden- und Deckenteil 2, 3 besteht ein relativ großer Abstand d. In Fig. 2 befindet sich in der Wägetisch 1 dagegen in einer Messposition, in der der Abstand zwischen Boden- und Deckenteil 2,3 deutlich geringer ist als in Fig.1.

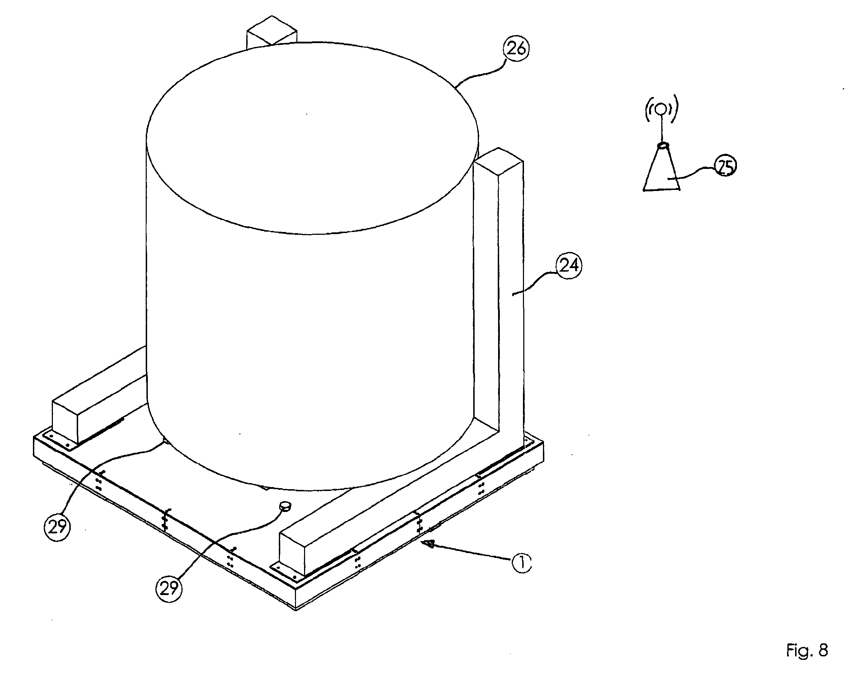

In der Beladeposition von Fig. 1 ist das Deckenteil 3 von den Wägezellen 5 abgehoben. Die Wägezellen 5 werden somit durch die beim Beladen oder Entladen des Wägetisches auftretenden Kräfte nicht belastet. Nach dem Aufsetzen eines Tiegels 26 (siehe Fig. 8) oder einer anderen Last wird das Deckenteil 3 auf die Wägezellen 5 abgesenkt, so dass eine kontinuierliche Gewichtsmessung stattfinden kann.

Fig. 3 zeigt das Bodenteil 2 des Wägetisches mit mehreren Lastaufnehmern 10, die in den Ecken des Bodenteils 2 angeordnet sind.

Zum Abheben des Deckenteils 3 ist eine Hubvorrichtung 6 vorgesehen, die hier mehrere Hydraulikzylinder 6 umfasst, welche ebenfalls in den Ecken des Bodenteils 2 angeordnet sind. Die Steuerung der Hubzylinder muss auf die Lastaufnehmer 10 genau abgestimmt sein. Zu hohe bzw. zu niedrigere Hubwege könnten eine Zerstörung der Wägezellen 5 bedeuten.

Die in den Ecken des Wägetisches 1 angeordneten Lastaufnehmer 10 als auch die Aktuatoren 6 der Hubvorrichtung sind vorzugsweise jeweils in einem Gehäuse angeordnet (nicht gezeigt), das die Elemente vor Umwelteinflüssen schützt.

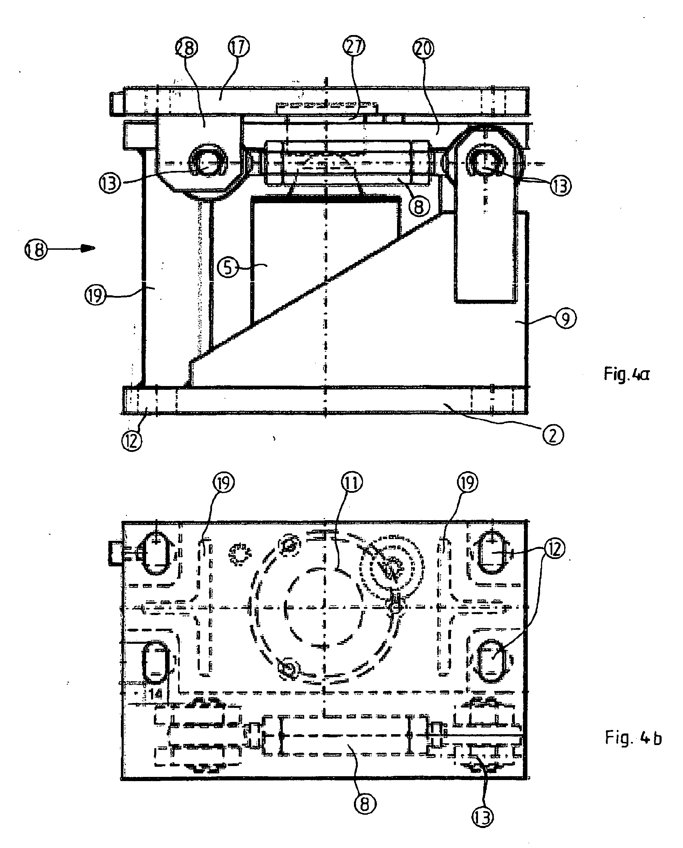

Fig. 4a und 4b zeigen die Anordnung eines Lastaufnehmers 10 im Detail. Die eigentliche Messdose 5 ist dabei von einem seitlich offenen Gehäuse 18 umgeben, das zwei gegenüberliegende Stützen 19 und eine mit den Stützen 19 fest verbundene Deckenplatte 20 umfasst. In der Deckenplatte 20 befindet sich eine Öffnung 11, durch die von oben ein Druckelement 27 hineinragt, das die Kraftmessdose 5 betätigt. Das Druckelement 27 ist hier ein separates Element, das an einer Druckplatte 17 befestigt ist (es kann aber auch ein Teil der Druckplatte 17 sein). Die Druckplatte 17 wird an der Unterseite des Deckenteils 3 montiert.

Die Druckplatte 17 ist über einen Querlenker 8 zur Aufnahme von Scher- und Querkräften mit dem Bodenteil 2 verbunden. Zur Befestigung des Querlenkers 8 umfasst die Druckplatte 17 eine Lasche 28. Das andere Ende des Dämpfungselements 8 ist über eine seitliche Wange 9 an einer Strebe des Bodenteils 2 befestigt ist. Der Querlenker 8 ist an seinen beiden Befestigungspunkten 13 jeweils gelagert, so dass die Druckplatte 17 zumindest in ihrer vertikalen Position frei tragend ist.

In der Aufsicht von Fig. 4b sind ferner die T-profilförmigen Querschnitte der seitlichen Stützen 19, die kreisförmige Öffnung 11 in der Deckenplatte 20 und mehrere Montagebohrungen 12 zum Befestigen der Druckplatte 17 am Deckenteil 3 zu erkennen.

Die Position des Wägetisches 1 wird von einem Kontrollsensor 7 überwacht. Der Sensor 7 als auch die Wägezellen 5 sind mit einem Steuergerät (nicht gezeigt) verbunden und steuerungstechnisch verriegelt.

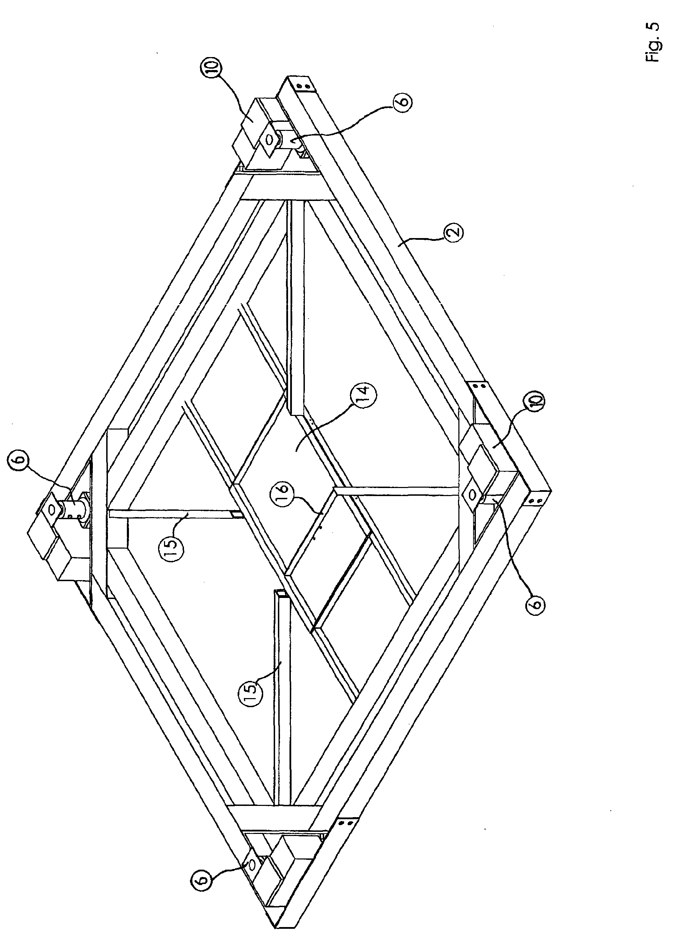

Fig. 5 zeigt nochmals das Bodenteil 2 des Wägetisches 1 mit einer Plattform 14 für hydraulische und/oder elektrische Bauteile. Der Bereich für die elektrischen und hydraulischen Bauteile (nicht gezeigt) ist durch einen Steg 16 getrennt.

Die Plattform 14 ist hier als Auffangwanne gebildet, die bei einer Leckage im Hydrauliksystem das gegebenenfalls austretende Hydraulikfluid auffängt. Die Bauweise schützt auch gegen ausgetretenes Flüssigaluminium Die Hydraulikleitungen und gegebenenfalls auch elektrische Leitungen verlaufen in Kanälen 15, die jeweils von der Plattform 14 zu den einzelnen Hydraulikzylindern 6 bzw. den Wägezellen 5 führen.

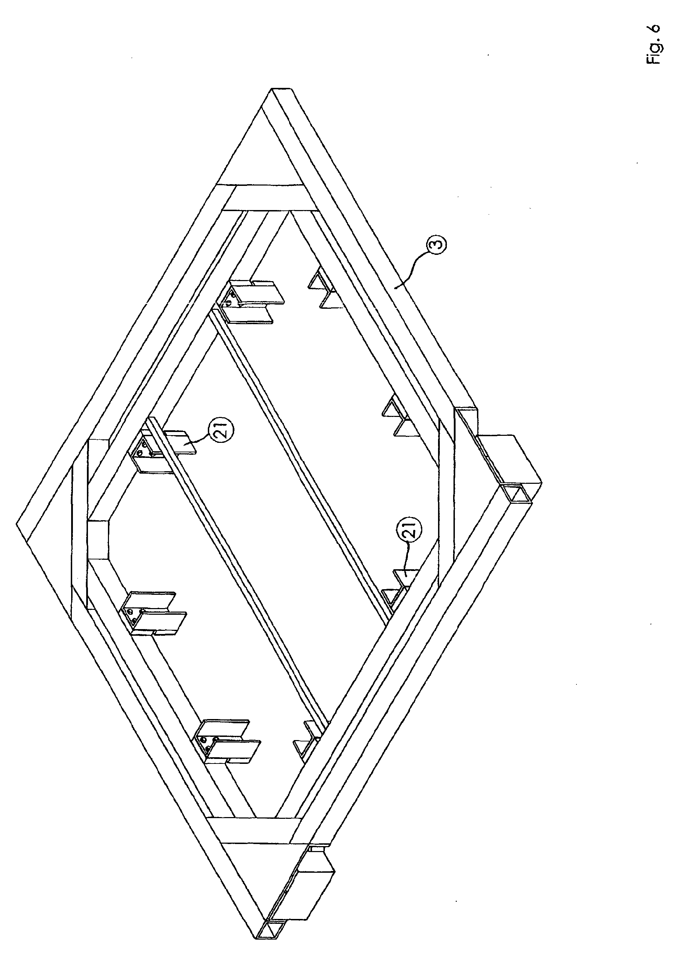

Fig. 6 zeigt das Deckenteil 3 des Wägetisches 1, das ebenfalls aus einzelnen Metallprofilen 4 geschweißt ist. Das Deckenteil entspricht den Abmessungen des Bodenteils 2. An der Innenseite des Rahmens sind mehrere U-Profile 21 befestigt, die nach unten in Richtung des Bodenteils 2 ragen und dieses im zusammengebauten Zustand überlappen.

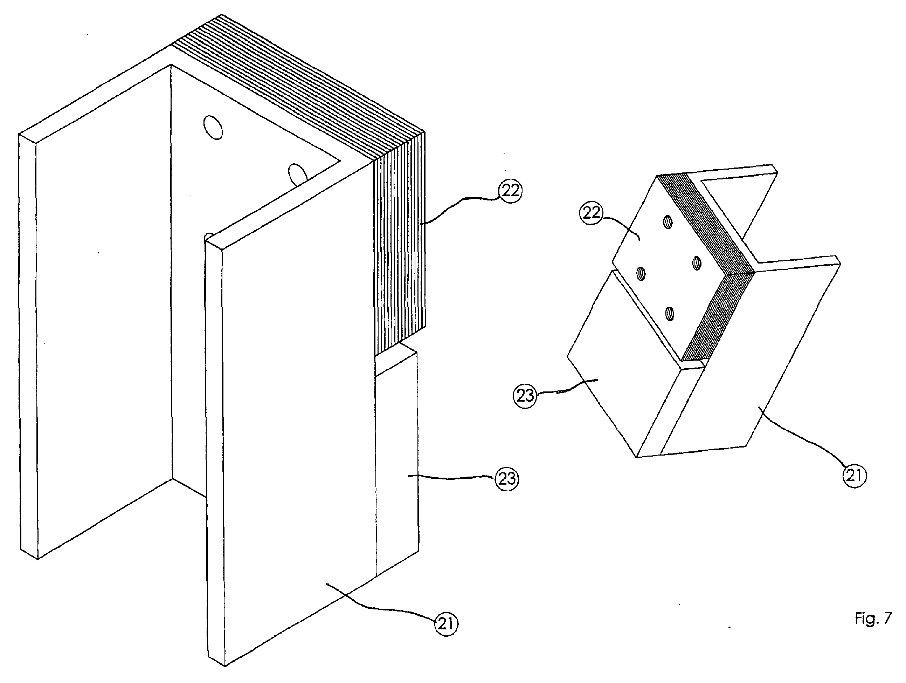

Fig. 7 zeigt diese U-Profile 21 in vergrößerter Ansicht. Jedes der Profile 21 ist je nach Bauform mit einer bestimmten Zahl von dazwischen liegenden Distanzblechen 22 am Deckenteil 3 festgeschraubt. Im unteren Bereich der Profile 21, der das Bodenteil 2 überlappt, ist jeweils ein Dämpfungselement 23, wie z.B. ein Gummi- oder Kunststoffpuffer vorgesehen. Diese Pufferelemente 23 sind hier an den Profilen 21 festgeklebt, könnten aber auch am Bodenteil 2 befestigt sein. Die Dicke der Distanzelemente 22 ist geringfügig größer als die der Pufferelemente 23, so dass ein geringes Spiel zwischen Bodenteil 2 und Deckenteil 3 besteht. Bei einer horizontalen Belastung des Wägetisches 1 werden die horizontalen Kräfte von den in den Figuren 4a und 4b dargestellten Querlenkern 8 und den Dämpfungsprofilen 21 aufgenommen.

Fig. 8 zeigt eine schematische Darstellung eines Wägetisches mit Tiegelstuhl 24, mit dem ein Tiegel 26 angehoben und gekippt werden kann. Zwei Sensoren 25, die beispielsweise als optische Sensoren ausgeführt sein können, erkennen das Zuführen bzw. Entfernen eines Tiegels 26. Ohne Beladung kann der Wägetisch z. B. somit ausgeschaltet und beim Beladen automatisch eingeschaltet werden.

Der Wägetisch 1 ist darüber hinaus mittels Ankerungen 29 im Boden verankert. Diese Verankerungen dienen zusätzlich als weitere Abhebesicherung.

Der Wägetisch befindet sich in im unbeladenen Zustand vorzugsweise in der ersten, ausgefahrenen Position (Fig. 1). Das Heranführen eines Tiegels bzw. eines anderen Gegenstandes wird mittels der Sensorik 25 oder ggf. auch anderer Sensoren erkannt. Nach dem Aufsetzen der Last fährt ein zugehöriges Steuergerät den Tisch 1 automatisch in die Messposition (Fig. 2) und führt eine Gewichtsmessung durch, während der Tiegel 26 befüllt oder entleert wird. Nach Erreichen eines vorgegebenen Soll-Gewichts wird der Vorgang automatisch beendet. Die Steuerung des Wägetisches 1 steuert hierzu den Kippmechanismus des Tiegelstuhls 24 oder einer Füllvorrichtung entsprechend an. Vor dem Abheben des Tiegels 26 wird der Wägetisch 1 wieder in die erste Position gefahren. Nach Erreichen dieser Position, die durch die Sensoren 7 erkannt wird, kann die Last ohne Gefahr einer Beschädigung des Wägetisches 1 wieder abgehoben werden. Das Abheben der Last erfolgt vorzugsweise wiederum automatisch unter Kontrolle der Steuereinrichtung.

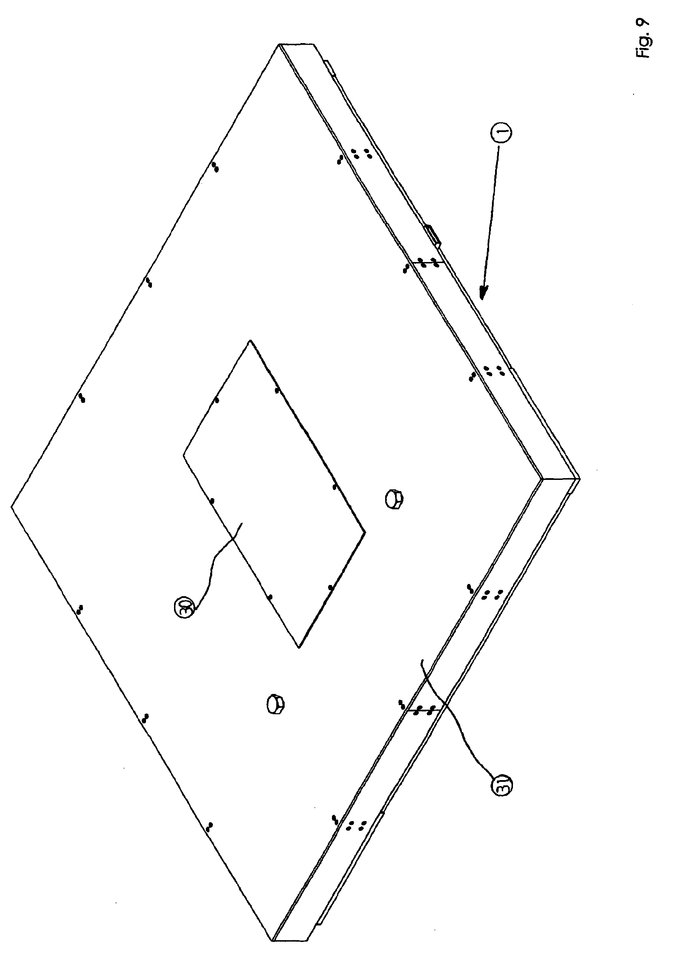

Fig. 9 stellt den kompletten Wägetisch ohne Tiegelstuhl dar. Hier ist eine Revisionsabdeckung 30 vorgesehen. Bei Entnahme gelangt man in den Bereich der Auffang- und Installationswanne 14 zu Steuereinheiten. Ein Abdeckplatte 31, die an das Deckenteil 3 angeschraubt ist, schützt darunter befindliche Bauteile vor Schmutz und Flüssigaluminium.

## Patentansprüche

1. Wägetisch (1) zum Verwiegen von Schmelztiegeln (26) für Metallschmelzen, umfassend ein Bodenteil (2), ein Deckenteil (3) und mehrere Wägezellen (5), die die auf das Deckenteil (3) wirkende Gewichtskraft aufnehmen, sowie eine Hubvorrichtung (6) zum Anheben oder Absenken des Deckenteils (3), wobei die Wägezellen (5) in der angehobenen Position entlastet sind und in der abgesenkten Position die auf das Deckenteil (3) wirkenden Kräfte aufnehmen, **dadurch gekennzeichnet, dass** der Wägetisch ein oder mehrere Dämpfungselemente (23) aufweist, die eingerichtet sind, die horizontal wirkenden Querkräfte aufzunehmen.

2. Wägetisch (1) nach Anspruch 1,
**dadurch gekennzeichnet,**
**dass** die Hubvorrichtung (6) einen oder mehrere Hubzylinder aufweist.

3. Wägetisch (1) nach Anspruch 3,
**dadurch gekennzeichnet,**
**dass** die Dämpfungselemente (8) als Gasdämpfer oder Hydraulikdämpfer ausgebildet sind.

4. Wägetisch (1) nach einem der vorhergehenden Ansprüche.
**dadurch gekennzeichnet,**
**dass** ein Kontrollsensor (7) zur Überwachung der Funktion der Hubvorrichtung (6) vorgesehen ist.

5. Wägetisch (1) nach einem der vorhergehenden Ansprüche,
**dadurch gekennzeichnet,**
**dass** oberhalb einer Wägezelle (5) eine Druckplatte (17) vorgesehen ist, die am Deckenteil (3) montierbar ist.

6. Wägetisch (1) nach Anspruch 5,
**dadurch gekennzeichnet,**
**dass** die Druckplatte (17) über einen Querlenker (8) mit dem Bodenteil (2) verbunden ist.

7. Wägetisch (1) nach einem der vorhergehenden Ansprüche,
**dadurch gekennzeichnet,**
**dass** das Boden- (2) und/oder Deckenteil (3) aus einer Rahmenkonstruktion hergestellt ist.

8. Wägetisch (1) nach einem der vorhergehenden Ansprüche,
**dadurch gekennzeichnet,**
**dass** im Bodenteil (2) eine Plattform (14) für hydraulische- und/oder elektrische Bauteile vorgesehen ist.

9. Wägetisch (1) nach Anspruch 8,
**dadurch gekennzeichnet,**
**dass** die Plattform (14) in Form einer Auffangwanne gebildet ist.

10. Wägetisch (1) nach einem der vorhergehenden Ansprüche,
**dadurch gekennzeichnet,**
**dass** am Boden- (2) und/oder Deckenteil (3) Profile (21) montiert sind, die das andere Teil (2,3) an dem sie nicht montiert sind, in vertikaler Richtung überlappen.

11. Wägetisch (1) nach Anspruch 10,
**dadurch gekennzeichnet,**
**dass** zwischen dem überlappenden Teil der Profile (21) und dem Boden- (2) oder Deckenteil (3) ein Dämpfungselement (23) vorgesehen ist.

12. Wägetisch (1) nach Anspruch 10 oder 11,
**dadurch gekennzeichnet,**
**dass** die Profile (21) U- oder Rechteck-Profile sind.

13. Wägetisch (1) nach einem der vorhergehenden Ansprüche,
**dadurch gekennzeichnet,**
**dass** auf dem Deckenteil (3) ein Tragegerüst (24) montiert ist.

14. Wägetisch (1) nach einem der vorhergehenden Ansprüche,
**dadurch gekennzeichnet,**
**dass** der Wägetisch (1) eine Sensorik (25) umfasst, die das Heranführen und Aufsetzen einer Last (26) erkennt.

15. Wägetisch (1) nach Anspruch 14,
**dadurch gekennzeichnet,**
**dass** der Wägetisch (1) eine Steuerung umfasst, die den Wägetisch (1) nach dem Aufsetzen einer Last (26) in die zweite Position stellt.

16. Wägetisch (1) nach Anspruch 14 oder 15,
**dadurch gekennzeichnet,**
**dass** der Wägetisch (1) eine Steuerung umfasst, die den Wägetisch (1) vor dem Abheben einer Last (26) in die erste Position stellt.

## Claims

1. Balance table (1) to weigh crucibles (26) for molten metal, comprising a base part (2); a cover part (3) and several weighing cells (5), which receive the weight force acting on the cover part (3), as well as a lifting device (6) to lift or lower the cover part (3), wherein the weighing cells (5) are unloaded in the lifted position and receive the forces acting on the cover part (3) in the lowered position,
**characterised in that**
the balance table has one or more damping elements (23) which are equipped to receive transverse forces that act horizontally.

2. Balance table (1) according to claim 1,
**characterised in that**,
the lifting device (6) has one or more lifting cylinders.

3. Balance table (1) according to claim 3,
**characterised in that**,
the damping elements (8) are formed as gas dampers or hydraulic dampers.

4. Balance table (1) according to one of the preceding claims,
**characterised in that**,
a control sensor (7) is provided to monitor the function of the lifting device (6).

5. Balance table (1) according to one of the preceding claims,
**characterised in that**,
a pressure plate (17) is provided above a weighing cell (5), which is able to be assembled on the cover part (3).

6. Balance table (1) according to claim 5,
**characterised in that**,
the pressure plate (17) is connected to the base part (2) via a wishbone (8).

7. Balance table (1) according to one of the preceding claims,
**characterised in that**,
the base (2) and/or cover part (3) is produced from a frame construction.

8. Balance table (1) according to one of the preceding claims,
**characterised in that**,
a platform (14) for hydraulic and/or electrical components is provided in the base part (2).

9. Balance table (1) according to claim 8,
**characterised in that**,
the platform (14) is formed in the shape of a collection tray.

10. Balance table (1) according to one of the preceding claims,
**characterised in that**,
profiles (21) are assembled on the base (2) and/or cover part (3), which do not overlap the other part (2,3), on which they are not assembled, in the vertical direction.

11. Balance table (1) according to claim 10,
**characterised in that**
a damping element (23) is provided between the overlapping part of the profiles (21) and the base (2) or cover part (3).

12. Balance table (1) according to claim 10 or 11,
**characterised in that**
the profiles (21) are U-profiles or right-angle profiles.

13. Balance table (1) according to one of the preceding claims,
**characterised in that**,
a carrier frame (24) is assembled on the cover part (3).

14. Balance table (1) according to one of the preceding claims,
**characterised in that**,
the balance table (1) comprises a sensor system (25) which recognises the introduction and setting down of a load (26) .

15. Balance table (1) according to claim 14,
**characterised in that**,
the balance table (1) comprises a control, which puts the balance table (1) into the second position after the setting down of a load (26).

16. Balance table (1) according to claim 14 or 15,
**characterised in that**,
the balance table (1) comprises a control, which puts the balance table (1) into the first position before the lifting of a load (26).

## Revendications

1. Table de pesée (1) destinée à peser des creusets (26) pour des métaux fondus, laquelle comprend un fond (2), un couvercle (3) et plusieurs cellules de pesage (5), qui reçoivent le poids agissant sur le couvercle (3), ainsi qu'un dispositif de levage (6) destiné à lever ou à baisser le couvercle (3), les cellules de pesage (5) étant chargées en position haute et recevant la force agissant sur le couvercle (3) en position basse, **caractérisée en ce que** la table de pesée comporte un ou plusieurs éléments d'amortissement (23), qui sont agencés pour recevoir une force transversale agissant horizontalement.

2. Table de pesée (1) selon la revendication 1,
**caractérisée en ce que** le dispositif de levage (6) comporte un ou plusieurs cylindres de levage.

3. Table de pesée (1) selon la revendication 3,
**caractérisée en ce que** les éléments d'amortissement (8) sont conçus comme amortisseurs à gaz ou comme amortisseurs hydrauliques.

4. Table de pesée (1) selon l'une quelconque des revendications précédentes,
**caractérisée en ce qu'**un capteur de contrôle (7) est prévu pour surveiller le fonctionnement du dispositif de levage (6).

5. Table de pesée (1) selon l'une quelconque des revendications précédentes,
**caractérisée en ce qu'**une plaque de pression (17) montée sur le couvercle (3) est prévue au-dessus d'une cellule de pesage (5).

6. Table de pesée (1) selon la revendication 5,
**caractérisée en ce que** la plaque de pression (17) est reliée au fond (2) par un bras transversal (8).

7. Table de pesée (1) selon l'une quelconque des revendications précédentes,
**caractérisée en ce que** le fond (2) et/ou le couvercle (3) est une construction en châssis.

8. Table de pesée (1) selon l'une quelconque des revendications précédentes,
**caractérisée en ce qu'**une plate-forme (14) est prévue dans le fond (2) pour des composants hydrauliques et/ou électriques.

9. Table de pesée (1) selon la revendication 8,
**caractérisée en ce que** la plate-forme (14) a la forme d'un bac collecteur.

10. Table de pesée (1) selon l'une quelconque des revendications précédentes,
**caractérisée en ce que** des profils (21) sont montés sur le fond (2) et/ou sur le couvercle (3), lesquels chevauchent verticalement l'autre partie (2, 3) sur laquelle ils ne sont pas montés.

11. Table de pesée (1) selon la revendication 10,
**caractérisée en ce qu'**un élément d'amortissement (23) est prévu entre la partie chevauchante des profils (21) et le fond (2) ou le couvercle (3).

12. Table de pesée (1) selon la revendication 10 ou 11,
**caractérisée en ce que** les profils (21) sont des profils en U ou des profils rectangulaires.

13. Table de pesée (1) selon l'une quelconque des revendications précédentes,
**caractérisée en ce qu'**un châssis de support (24) est monté sur le couvercle (3).

14. Table de pesée (1) selon l'une quelconque des revendications précédentes,
**caractérisée en ce que** la table de pesée (1) comprend un ensemble de capteurs (25) qui détectent l'arrivée et la pose d'une charge (26).

15. Table de pesée (1) selon la revendication 14,
**caractérisée en ce que** la table de pesée (1) comprend une commande qui met la table de pesée (1) dans la seconde position après la pose d'une charge (26).

16. Table de pesée (1) selon la revendication 14 ou 15,
**caractérisée en ce que** la table de pesée (1) comprend une commande qui met la table de pesée (1) dans la première position avant le levage d'une charge (26).
